# FASCICULE DE BREVET EUROPEEN

(11) **EP 0 766 438 B1**
(45) Date de publication et mention de la délivrance du brevet: **14.01.2004**
(21) Numéro de dépôt: 96202699.3
(22) Date de dépôt: 26.09.1996
(51) Int. Cl.: H04M 1/72

(54) **Système téléphonique sans fil avec dispositif périphérique contrôlé à distance**
Schnurloses Telefonsystem mit einem fernsteuerbaren Peripheriegerät
Cordless telephone system with a remote controlled peripheral device

(30) Priorité: 29.09.1995 FR 9511500
(43) Date de publication de la demande: 02.04.1997
(73) Titulaire: Koninklijke Philips Electronics N.V., 5621 BA Eindhoven (NL)
(72) Inventeur: Gouessant, Hervé, Société Civile S.P.I.D., 75008 Paris (FR)
(74) Mandataire: Chaffraix, Jean

(56) Documents cités:
- WO-A-93/23949
- DE-A- 4 321 304
- DE-A- 4 342 776
- GB-A- 2 242 335
- US-A- 5 138 649
- US-A- 5 396 546
- PATENT ABSTRACTS OF JAPAN vol. 014, no. 520 (E-1002), 14 Novembre 1990 & JP-A-02 218291 (FUJITSU GENERAL LTD), 30 Août 1990,
- PROCEEDINGS OF THE WESTERN CANADA CONFERENCE ON COMPUTER, POWER AND COMMUNICATIONS SYSTEMS IN A RURAL ENVIRONMENT. (WESCANEX), REGINA, MAY 29 - 30, 1991, 29 Mai 1991, INSTITUTE OF ELECTRICAL AND ELECTRONICS ENGINEERS, pages 309-311, XP000313096 KING P D: "DEVICE FOR THE INTEGRATION OF TELEVISION AND TELEPHONE CONTROL VIA HAND HELD INFRARED REMOTE"

## Description

La présente invention concerne un système téléphonique comprenant une première partie fixe dite la base, pour l'émission/réception de signaux, destinée à être reliée à une ligne téléphonique, et au moins une partie contenue dans un boîtier mobile dite le mobile, munie de moyens de traitement de signal audio, et communiquant par voie hertzienne avec la base.

L'invention concerne aussi un périphérique spécialisé pour un système téléphonique du type précité.

Les appareils de téléphone sans fil (cordless en anglais) sont connus depuis quelques années. Grâce à la liaison hertzienne qui existe entre le combiné mobile et la base située au domicile de l'utilisateur, ces appareils apportent à ce dernier une grande souplesse d'emploi en permettant un appel entrant ou sortant, dans un rayon de quelques centaines de mètres autour de la base.

Ce type de matériel nouveau, outre la plus grande liberté qu'il apporte à l'action de téléphoner, permet à peu de frais désormais de résoudre d'autres problèmes techniques qui peuvent se poser, dans des conditions particulières d'utilisation du téléphone, préoccupation qui est sous-jacente à la présente invention.

Une de ces conditions particulières d'utilisation est celle qui consiste à souhaiter téléphoner ou s'apprêter à recevoir un appel alors qu'on est occupe à regarder et écouter son téléviseur. Les opérations à effectuer dans un tel cas sont celles qui consistent à baisser le volume du son du téléviseur et à accéder à l'appareil téléphonique. L'invention se propose de résoudre ce problème technique général en occasionnant le moins de gêne possible, étant entendu que l'utilisateur est équipe d'un téléphone sans fil multicanal.

Du brevet japonais 6-14370 (A), il est connu un téléphone sans fil qui permet de résoudre le problème précité : pour ce faire, l'un des combinés mobiles comporte aussi une télécommande infrarouge du téléviseur.

Du brevet US 5 396 546, il est connu (Revendication 17 et figure 1 du document cité) un système électronique pour donner accès par télétexte à une pluralité de facilités, ce système électronique étant couplé à un ordinateur hôte et comprenant:
des moyens d'interface du téléviseur;
une télécommande pour sélectionner un menu;
un modem pour coupler l'ordinateur hôte à un réseau téléphonique;
un contrôleur couplé aux moyens d'interface et au modem et capable d'être couplé sans fil avec la télécommande comprenant des moyens pour:
   Initier un appel vers l'ordinateur hôte via le modem et le réseau de téléphone pour obtenir des données de configuration de cet ordinateur;
   assembler un menu listant une pluralité de titres de la pluralité de facilités à partir de ces données de configuration;
   afficher le menu sur la télévision;
   accepter via la télécommande une sélection d'une des facilités;
   initier un second appel vers l'ordinateur via le modem pour établir une connexion entre le système électronique et ladite facilité.

Le système connu du brevet US 5 396 546 a pour objet de fournir des moyens d'accès à des informations appelées télétexte, en utilisant des moyens courants et en s'affranchissant de l'utilisation compliquée d'un ordinateur personnel.

La présente invention se propose de faire un pas supplémentaire dans la résolution du problème technique prédté.

Un but de l'invention est de pouvoir téléphoner au moyen d'une télécommande infrarouge, sur appel entrant ou sortant.

Un autre but est de mettre à profit le haut-parleur et l'écran d'un téléviseur, sans avoir à les modifier pour cela, pour permettre d'effectuer avec le meilleur confort une communication téléphonique.

Ces buts sont atteints et les inconvénients de l'art antérieur sont atténués grâce au fait que le système téléphonique indique au premier paragraphe est remarquable en ce qu'il comporte une seconde partie fixe, dite : le périphérique, munie de moyens de traitement de signal audio, et communiquant d'une part avec la base et d'autre part avec un récepteur de télévision dit : le téléviseur, pour au moins l'utilisation du haut-parleur du téléviseur en mode dit : téléphone mains-libres, ledit périphérique comportant en outre un microphone, et des moyens de réception de signaux infrarouges à partir d'une télécommande spécialisée, apte a commander a la fois ledit périphérique et ledit téléviseur.

La télécommande à utiliser est de type universel, c'est-à-dire que, outre la commande du téléviseur, elle permet aussi par action sur un bouton "téléphone" d'actionner un élément périphérique particulier du téléviseur qui, en l'occurrence, a pour l'essentiel la structure d'un combiné de téléphone sans fil. En particulier, les chiffres de la télécommande pour la sélection des programmes de télévision, servent aussi pour composer les numéros de téléphone, tout ceci restant compatible avec la télécommande éventuelle d'autres appareils périphériques du téléviseur tel qu'un magnétoscope, par exemple. La réalisation de la télécommande particulière à la mise en oeuvre de la présente invention est à la portée de l'homme du métier.

Le périphérique peut comporter des piles ou batteries pour son alimentation électrique. De préférence, il comporte pour son alimentation un cordon à connecter au réseau électrique. Il peut aussi être intégré soit à la base, soit au téléviseur.

Selon un mode de réalisation préféré de l'invention, le périphérique comporte un modulateur destine a fournir un signal de sonnerie préprogrammé au haut-parleur du téléviseur, sur appel téléphonique entrant

Selon un autre mode de réalisation préféré le périphérique comporte des premiers moyens d'affichage pour afficher sur l'écran dudit téléviseur des informations relatives à l'identité de l'appelant.

Selon un autre mode de réalisation préféré le périphérique comporte des deuxièmes moyens d'affichage pour afficher sur l'écran dudit téléviseur des informations relatives a la configuration de fonctionnement choisie par l'utilisateur pour le système téléphonique ou à l'agenda téléphonique de celui-ci, ou au réglage sonore de l'anti-larsen.

La description qui suit en regard des dessins annexés, le tout donne à titre d'exemple non limitatif fera bien comprendre comment l'invention peut être réalisée.
La figure 1 représente, sous forme d'éléments séparés, le système téléphonique selon l'invention.
La figure 2 est le schéma synoptique d'un combiné (ou mobile), connu, d'un appareil téléphonique sans fil.
La figure 3 est le schéma synoptique d'un mode de réalisation du périphérique de téléviseur pour système téléphonique selon l'invention.

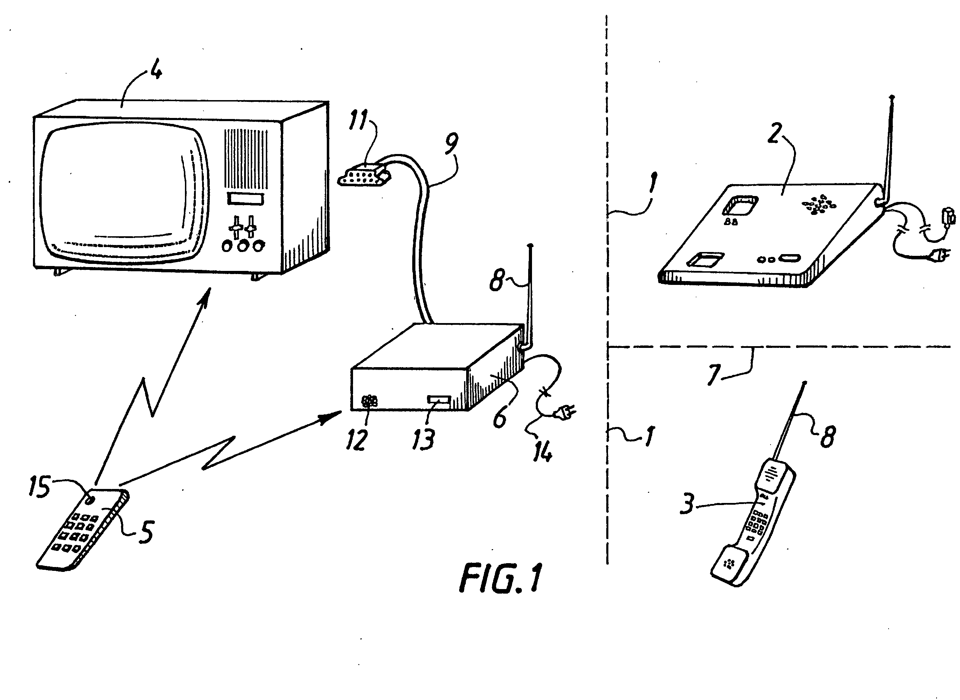

Le matériel nécessaire à la mise en oeuvre de l'invention est représenté à la figure 1. Il s'agit, à droite d'un trait interrompu 1, d'un téléphone sans fil multicanal, par exemple le TD 9203 de Philips, dont on a représenté la base 2 et l'un des combinés mobiles 3, la base et le combiné étant munis chacun d'une antenne pour coopérer par voie hertzienne, à distance. A gauche du trait 1 figure un téléviseur 4 muni d'une prise péritel (non visible sur la figure), avec sa télécommande infrarouge (IR) 5 et un élément périphérique du téléviseur, 6, nommé : le périphérique, dans la suite du texte. Les éléments 2, 3 et 4, connus, sont supposés être déjà à la disposition d'un utilisateur potentiel et, typiquement, ils sont supposés se trouver dans des locaux différents, à savoir : à l'intérieur de l'appartement pour le combiné 3, dans une pièce pour la base 2 et dans une autre pièce pour le téléviseur 4, ce que symbolisent les traits interrompus 1 et 7.

De façon visible sur la figure, le périphérique 6 comporte une antenne 8, un cordon 9 muni d'une prise péritel (ou SCART) 11 à brancher sur celle du téléviseur 4, un micro 12 et une centrale de réception de rayonnement IR 13. Pour son alimentation, qui pourrait aussi être réalisée à partir de piles ou de batterie d'accumulateurs, le périphérique 6 comporte de préférence un cordon électrique 14 à relier au réseau électrique.

La télécommande 5 est de type universel, c'est-à-dire que, outre la commande du téléviseur, elle permet aussi par action sur un bouton "téléphone" 15 d'actionner un élément périphérique particulier du téléviseur, le périphérique 6 qui, en l'occurrence, a pour l'essentiel la structure d'un combiné de téléphone sans fil. En particulier, les chiffres de la télécommande IR 5 pour la sélection des programmes de télévision, servent aussi pour composer les numéros de téléphone, tout ceci restant compatible avec la télécommande éventuelle d'autres appareils périphériques du téléviseur 4 tel qu'un magnétoscope, par exemple. La réalisation de la télécommande particulière à la mise en oeuvre de la présente invention est à la portée de l'homme du métier.

Le micro 12 du périphérique 6, destiné à une communication téléphonique en mode dit : mains-libres, comporte, de préférence, un dispositif anti-larsen réalisable par un homme de métier.

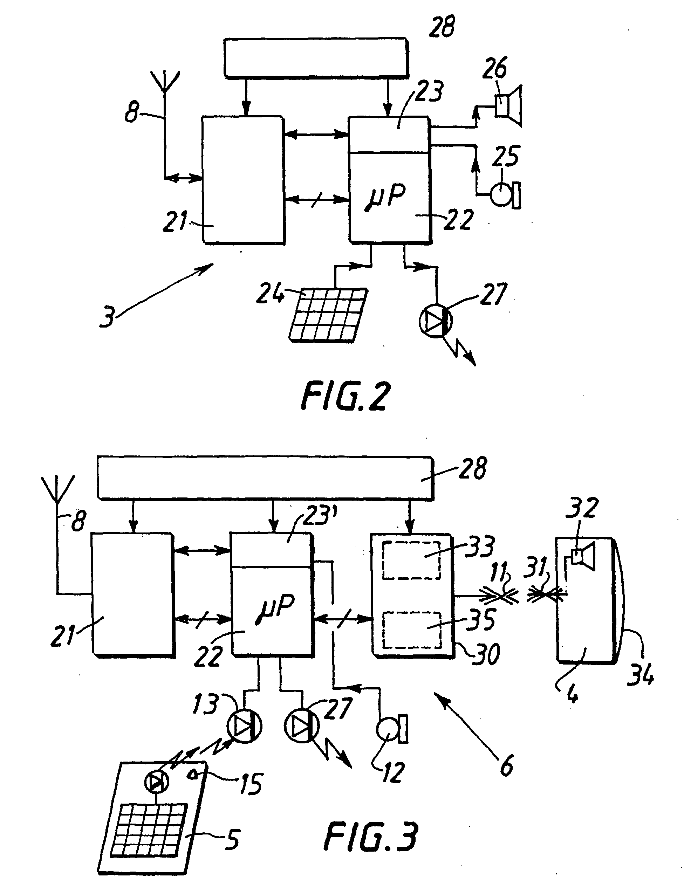

La structure du périphérique 6 est, pour l'essentiel, celle du combiné mobile 3, décrite ci-dessous en référence à la figure 2.

Le combiné 3 se compose d'une antenne émettrice-réceptrice 8, un bloc 21 de traitement de signal radio, un microprocesseur 22 avec une interface analogique 23, et un clavier 24 permettant de réaliser les fonctions de téléphonie. Un micro 25 et un haut-parleur 26 sont reliés à l'interface 23 qui comporte un dispositif d'anti-local. Une DEL 27 indique la prise de ligne lorsqu'elle est allumée. Une alimentation 28 fournit l'énergie nécessaire aux blocs 21 et 22.

Sur la figure 3 qui représente le périphérique 6 avec sa télécommande IR 5, on retrouve les principaux éléments de la figure 2, avec les mêmes fonctions, soit 8, 21, 22, 23, 27, 28, l'alimentation 28 étant cependant, de préférence, reliée au réseau électrique par un cordon.

Cependant, à la figure 3, le clavier est déporté, les commandes étant faites à partir de la télécommande IR 5, qui est d'ailleurs aussi celle du téléviseur 4. Le micro 12 est muni, en 23', d'un dispositif anti-larsen "mains-libres" non représenté. Le périphérique 6 comporte en outre un bloc supplémentaire 30 relié à l'alimentation 28, qui sert d'interface bidirectionnelle entre le microprocesseur 22 et la partie mâle 11 de la prise péritel (ou SCART) dont la partie femelle, sur le téléviseur 4, est représentée en 31.

Le combiné de la figure 3, qui incorpore au moins le haut-parleur 32 du téléviseur 4 est conçu pour fonctionner en mode mains-libres, à partir de la télécommande IR 5.

Selon un mode de réalisation compatible avec le précédent, on peut prévoir de dériver vers le haut-parleur 32, le signal de sonnerie d'un appel entrant, moyennant d'ajouter dans le bloc d'interface 30, un modulateur 33 de signal de sonnerie qui est ensuite transmis au haut-parleur 32 par l'intermédiaire d'une voie audio entrante de la prise péritel (SCART).

Les fonctions, très faciles à réaliser par le combiné téléphonique de la figure 3, lui-même facile à réaliser par l'homme de métier au présent niveau de divulgation, sont pour un appel entrant :
- la sonnerie par circulation de cette information téléphonique particulière à travers les éléments : 8, 21, 22, 30, 11-31 jusqu'au haut-parleur 32,
- la prise de ligne par l'utilisateur en appuyant sur le bouton 15 "téléphone" de la télécommande IR 5, puis sur le bouton "décrocher" (non représenté). La prise de ligne se manifeste alors par l'allumage de la DEL 27, le haut-parleur 32 étant simultanément commuté du téléviseur au téléphone. La communication peut alors avoir lieu, en mode mains-libres. La parole est transmise via le micro 12 sous contrôle du dispositif "mains-libres" anti-larsen. Pour raccrocher, il suffit alors d'appuyer en 5 sur le bouton "télévision", ce qui remet l'ensemble du dispositif à l'état initial, c'est-à-dire en mode "télévision", tout en rétablissant à l'état de veille la partie téléphone de l'ensemble représenté à la figure 3.

Un appel sortant est tout aussi ergonomique qu'un appel entrant :
- appuyer sur la touche 15 en 5,
- composer le numéro désiré, en 5,
- la prise de ligne éventuelle se manifeste ensuite par l'allumage de la DEL 27 et la voix du correspondant dans le haut-parleur 32, comme pour un appel sortant,
- à la fin de la communication, raccrocher comme pour un appel entrant.

Avantageusement, on peut prévoir de doter le combiné de la figure 3 de fonctions vidéo avec affichage sur l'écran 34 du téléviseur. Ces fonctionnalités sont réalisables à partir du microprocesseur spécialisé 22, du bloc optionnel 35 appartenant au bloc d'interface 30 et des voies vidéo entrantes de la prise péritel. La technique vidéo utilisée pour l'affichage en 34 est de préférence celle dite OSD (On Screen Display en anglais), permettant de faire apparaître du texte sur une partie de l'écran 34. A cet effet, le bloc 35 comporte par exemple un circuit PCA 8515/003 produit par la société Philips, permettant d'afficher jusqu'à 192 caractères ; à ce circuit doit être associé, en 35, un circuit extracteur de synchro par exemple un TDA 4691 de Philips qui reçoit le signal vidéocomposite du téléviseur 4, via la prise péritel 31-11.

Les fonctionnalités vidéo à réaliser peuvent être notamment :
- appel entrant avec identification du correspondant appelant (Services Class, ou Caller ID en anglais),
- agenda privé, mémorisé en 35, dans le périphérique 6,
- gestion de l'agenda privé,
- programmation des options choisies par l'utilisateur, pour la configuration de fonctionnement de son système téléphonique, telles que sonnerie (oui ou non) timbre de sonnerie ; réglage de l'anti-larsen...

On notera que, pour un fonctionnement optimal des dispositifs avec fonctionnalités vidéo décrits ci-dessus, la base 2 nécessite un modem de décodage de l'identification de l'appelant (Services Class, ou Caller ID en anglais).

Pour plus d'informations sur les fonctionnalités vidéo commandables à partir d'une télécommande IR pour affichage sur un écran de téléviseur, le lecteur peut se référer au brevet français 2 710 807.

Le téléphone sans fil mains-libres commandable par télécommande infrarouge et incorporant un téléviseur est particulièrement utile pour des personnes appelées à se déplacer en fauteuil roulant ou à garder la chambre.

L'invention ne se limite pas aux modes de réalisation décrits ci-dessus, plusieurs autres variantes étant possibles. Notamment, le périphérique 6 qui, dans le texte qui précède est représenté comme un élément séparé, pourrait aussi être intégré soit au téléviseur 4, soit à la base 2. Dans le cas où le périphérique est intégré à la base, la liaison entre eux par voie hertzienne n'est plus nécessaire, mais, pour que la commande du périphérique demeure possible à partir de la télécommande infrarouge 5, il faut alors que le téléviseur et la base soient situés dans la même pièce. Selon l'autre option où le périphérique est intégré au téléviseur, le cordon 9 muni d'une prise péritel et le cordon électrique 14 ne sont plus nécessaires.

## Revendications

1. Périphérique (6) spécialisé pour un système téléphonique, ce système téléphonique comportant une base (2) et au moins un mobile (3), **caractérisé en ce que**:
ce périphérique (6) est adapté à coopérer avec un récepteur de télévision (4) appelé "téléviseur" en un mode dit "téléphone mains libres", et
ce périphérique comprend:
des moyens de traitement de signal audio;
des moyens pour communiquer d'une part avec ladite base par voie hertzienne (21) et d'autre avec ledit tétéviseur (4) via un cordon et une prise SCART, pour au moins l'utilisation du haut-parleur (32) téléviseur en mode main-libres;
un microphone muni d'un dispositif anti-Larsen (12), et
des moyens de réception des signaux infrarouges (12) d'une télécommande spécialisée (5) apte à commander à la fois le périphérique lui-même et ledit téléviseur.

2. Périphérique (6) selon la Revendication 1, comprenant un cordon pour son alimentation à partir du réseau électrique.

3. Périphérique (6) selon l'une des Revendications 1 ou 2, comprenant un modulateur (33) adapté à fournir un signal de sonnerie préprogrammé audit haut-parleur (32) du téléviseur, sur appel téléphonique entrant.

4. Périphérique (6) selon l'une des Revendications 1 à 3, dans lequel le système téléphonique est adapté à détecter l'identification d'un appelant, ce périphérique comprenant des premiers moyens de contrôle d'affichage (35) pour utiliser l'écran du dit téléviseur (34) pour afficher des informations relatives à l'identité de l'appelant.

5. Périphérique (6) selon la Revendication 4, **caractérisé en ce que** lesdits premiers moyens de contrôle d'affichage (35) pour utiliser l'écran du dit téléviseur (34) pour afficher des informations relatives à l'identité de l'appelant produisent un affichage du type dit OSD, "On Screen Display" en Anglais, qui utilise une Incrustation d'image sur l'écran du dit téléviseur.

6. Périphérique (6) selon l'une des Revendications 1 à 4, comprenant des seconds moyens de contrôle pour utiliser l'écran du dit téléviseur pour afficher des informations relatives à la configuration de fonctionnement choisie par l'utilisateur pour l'appareil téléphonique, ou à l'agenda téléphonique de l'utilisateur, ou au réglage sonore du dispositif anti-Larsen.

7. Système téléphonique comprenant:
une première partie fixe appelée "la base (2)", pour l'émission/réception de signaux et adaptée à être couplée à une ligne téléphonique; et
au moins une partie contenue dans un boîtier mobile appelée "le mobile (3)", qui comprend des moyens de traitement de signal audio et des moyens pour communiquer avec la base par voie hertzienne (21), ce système téléphonique étant **caractérisé en ce qu'**il comprend en outre une seconde partie fixe comprenant un périphérique (6) spécialisé selon l'une des Revendications 1 à 6.

## Patentansprüche

1. Spezielles Peripheriegerät (6) für ein Telefonsystem, wobei das besagte Telefonsystem eine Basis (2) und mindestens ein Mobilteil (3) enthält, **dadurch gekennzeichnet, dass**:
dieses Peripheriegerät (6) befähigt ist, mit einem Fernsehempfänger (4), dem sogenannten "Fernseher", im sogenannten "Freihandmodus" zu arbeiten, und
dieses Peripheriegerät enthält:
Verfahren zur Verarbeitung eines Tonsignals;
Verfahren, um einerseits über Funk (21) mit der besagten Basis und andererseits mit dem besagten Fernseher (4) über ein Kabel und einen SCART-Anschluss für mindestens die Verwendung des Lautsprechers (32) des Fernsehers in Freihandmodus in Verbindung zu treten;
ein Mikrofon mit einer Anordnung zur Verhinderung von Rückkopplung (12);
Verfahren für den Empfang von infrarotsignalen (11) einer speziellen Fernbedienung (5) für die Bedienung sowohl des Peripheriegeräts als auch des besagten Fernsehers.

2. Peripheriegerät (6) nach Anspruch 1 mit einem Kabel für seine Versorgung über das elektrische Stromnetz.

3. Peripheriegerät (6) nach einem der Ansprüche 1 oder 2 mit einem Modulator (33) für die Abgabe eines vorprogrammierten Tonsignals an den Lautsprecher des Fernsehers bei einem eingehenden Telefonanruf.

4. Peripheriegerät (6) nach einem der Ansprüche 1 bis 3, in dem das Telefonsystem vorgesehen ist, die Personendaten eines Anrufers zu erkennen, wobei dieses Peripheriegerät erste Steuerungsverfahren für die Anzeige (35) auf dem Bildschirm des besagten Fernsehers (34) der Informationen in Bezug auf die Personendaten des Anrufers enthält.

5. Peripheriegerät (6) nach Anspruch 4, **dadurch gekennzeichnet, dass** die ersten Steuerungsverfahren für die Anzeige (35) auf dem Bildschirm des besagten Fernsehers (34) der Informationen in Bezug auf die Personendaten des Anrufers eine Anzeige vom Typ OSD, "On Screen Display" in Englisch, vornehmen, welches das Einblenden eines Bildes in den Bildschirm des Fernsehers ermöglicht.

6. Peripheriegerät (6) nach einem der Ansprüche 1 bis 4, mit zweiten Steuerungsverfahren für die Anzeige auf dem Bildschirm des besagten Fernsehers der Informationen in Bezug auf die Konfiguration der vom Anwender gewählten Betriebsweise für das Telefonsystem oder sein Telefonbuch oder die Toneinstellung zur Verhinderung von Rückkopplung.

7. Telefonsystem mit:
einem ersten festen Teil, der sogenannten "Basis" (2), für das Senden/Empfangen von Signalen in Verbindung mit einer Telefonleitung; und
und mindestens einem mobilen Teil, dem sogenannten "Handgerät" (3), versehen mit Mitteln zur Verarbeitung eines Tonsignals und Mitteln, um über Funk (21) mit der Basis Verbindung aufzunehmen, wobei dieses Telefonsystem **dadurch gekennzeichnet ist, dass** es außerdem ein zweites festes Teil mit einem speziellen Peripheriegerät (6) nach einem der Ansprüche 1 bis 6 enthält.

## Claims

1. A special peripheral device (6) for a telephone system, this telephone system comprising a base station (2) and at least a mobile station (3), **characterized in that**:
this peripheral device (6) is adapted to cooperate with a television receiver (4) called TV set in a "hands-free telephone" mode and
this peripheral device comprises:
audio signal processing means;
means for communicating, on the one hand, with said base station by radio (21), and, on the other hand, with said TV set (6) via a cord and a SCART connector, for at least using the television loudspeaker (32) in a hands-free mode;
a microphone provided with an anti-Larsen device (12), and
means for receiving infrared signals (13) from a special remote control device (5) able to control both the peripheral device itself and said TV set.

2. A peripheral device (6) as claimed in claim 1, comprising a cord for its power supply from the electric mains.

3. A peripheral device (6) as claimed in one of the claims 1 or 2, comprising a modulator (33) adapted to supply a pre-programmed ringing signal to said television loudspeaker (32) in response to an incoming telephone call.

4. A peripheral device (6) as claimed in any one of the claims 1 to 3, in which the telephone system is adapted to detect the identification of a caller, this peripheral device comprising first display control means (35) for the use of the screen (34) of said television set to display data relating to the caller's identity.

5. A peripheral device (6) as claimed in Claim 4, **characterized in that** said first display control means (35) for the use of the screen (34) of said television set to display data relating to the caller's identity provide on-screen display OSD which uses image overlay on the screen of said TV set.

6. A peripheral device (6) as claimed in any one of the claims 1 to 4, comprising second control means for using the screen of said TV set for displaying data relating to the configuration of the operation of the telephone as selected by the user, or to the telephone directory of the user, or to the sound control of the anti-Larsen device.

7. A telephone system comprising
a first stationary part called the "base station" (2), for emitting/receiving signals and adapted to be coupled to a telephone line, and
at least a part accommodated in a mobile housing, called the "mobile station" (3), which mobile station comprises audio signal processing means (21) communicating with the base station by radio, this telephone system being **characterized in that** it further comprises a second stationary part comprising a peripheral device (6) as claimed in any one of the claims 1 to 6.
